# EUROPÄISCHE PATENTSCHRIFT

(11) **EP 3 163 278 B1**
(45) Veröffentlichungstag und Bekanntmachung des Hinweises auf die Patenterteilung: **08.04.2020**
(21) Anmeldenummer: 16182378.6
(22) Anmeldetag: 02.08.2016
(51) Int. Cl.: G01L 19/00

(54) **VERFAHREN ZUR HERSTELLUNG EINES SENSORS ZUR ERFASSUNG MINDESTENS EINER EIGENSCHAFT EINES MEDIUMS**
METHOD OF PRODUCING A SENSOR FOR DETECTING AT LEAST ONE PROPERTY OF A MEDIUM
PROCEDE DE FABRICATION D'UN CAPTEUR DESTINE A DETECTER AU MOINS UNE CARACTERISTIQUE D'UN MILIEU

(30) Priorität: 29.10.2015 DE 102015221147
(43) Veröffentlichungstag der Anmeldung: 03.05.2017
(73) Patentinhaber: ROBERT BOSCH GMBH, 70442 Stuttgart (DE)
(72) Erfinder: Reinhard, Markus, 70806 Kornwestheim (DE); Barnstorff, Vincent, 99817 Eisenach (DE)

(56) Entgegenhaltungen:
- EP-A2- 0 922 946
- WO-A1-2009/153737
- US-A1- 2011 088 480

## Beschreibung

### Stand der Technik

Aus dem Stand der Technik sind verschiedene Vorrichtungen und Verfahren zum Erfassen von Drücken von fluiden Medien, wie beispielsweise Gasen und Flüssigkeiten, bekannt. Die Messgröße Druck ist eine in Gasen und Flüssigkeiten auftretende, allseits wirkende, nicht gerichtete Kraftwirkung. Zur Messung der Drücke gibt es dynamisch und statisch wirkende Messwertaufnehmer bzw. Sensoren. Dynamisch wirkende Drucksensoren dienen nur zur Messung von Druckschwingungen in gasförmigen oder flüssigen Medien. Die Druckmessung kann beispielsweise direkt, über Membranverformung oder durch einen Kraftsensor erfolgen. Insbesondere zur Messung sehr hoher Drücke wäre es grundsätzlich möglich, einen elektrischen Widerstand dem Medium auszusetzen, denn viele bekannte elektrische Widerstände zeigen eine Druckabhängigkeit. Dabei gestalten sich jedoch die Unterdrückung der gerichteten Abhängigkeit der Widerstände von der Temperatur und die druckdichte Durchführung der elektrischen Anschlüsse aus den Druckmedien heraus als schwierig.

Eine weit verbreitete Methode der Druckerfassung verwendet daher für eine Signalgewinnung zunächst eine dünne Membran als mechanische Zwischenstufe, die einseitig dem Druck ausgesetzt ist und sich unter dessen Einfluss durchbiegt. Sie kann in weiten Grenzen nach Dicke und Durchmesser dem jeweiligen Druckbereich angepasst werden. Derartige Drucksensoren sind beispielsweise in Konrad Reif (Hrsg.): Sensoren im Kraftfahrzeug, 1. Aufl. 2010, Seiten 80-82 und Seiten 134-136 beschrieben.

In DE 10 2011 088044 A1 wird eine Drucksensoranordnung zur Erfassung eines Drucks eines fluiden Mediums in einem Messraum vorgeschlagen. Die Drucksensoranordnung umfasst ein Sensorgehäuse, mindestens ein Sensorelement, das so in oder an dem Sensorgehäuse angeordnet ist, dass es zum Messen eines Drucks des Mediums in dem Medium aussetzbar ist, einen Druckanschluss, mittels dessen die Drucksensoranordnung an oder in dem Messraum anbringbar ist, und einen Gehäusesockel, auf dem das Sensorgehäuse angeordnet ist. Der Gehäusesockel ist mit dem Druckanschluss durch mindestens eine Verbindung verbunden, ausgewählt aus einer kraftschlüssigen Verbindung und einer formschlüssigen Verbindung.

In DE 10 2013 202898 A1 wird eine Sensorkomponente vorgeschlagen, insbesondere für einen Drucksensor, umfassend ein Gehäuseteil, wenigstens ein auf dem Gehäuseteil angeordnetes Klebemittel und einen mit mittels des wenigstens einen Klebemittels auf dem Gehäuseteil befestigten Schaltungsträger mit einem äußeren Rand. Um ungewollte elektrische Kurzschlüsse zwischen dem Gehäuseteil und dem Schaltungsträger infolge von Restschmutzpartikeln oder metallischen Schweißpartikeln zu vermeiden, ist dabei vorgesehen, dass das wenigstens eine Klebemittel wenigstens bereichsweise über den äußeren Rand des Schaltungsträgers herausragt. Die Erfindung betrifft weiterhin einen Drucksensor mit einer solchen Sensorkomponente.

Bei aktuellen Hochdruck- und Mitteldrucksensoren erfolgt eine Anbindung zwischen einer kundenspezifischen Schnittstelle und einem Schaltungsträger, welcher eine Auswerteelektronik aufweist, grundsätzlich mittels so genannter S-Federn. Die S-Federn können auf dem Schaltungsträger grundsätzlich viel Platz in Anspruch nehmen. Eine Anbindung an einen elektrischen Kontakt ist jedoch meist auf eine horizontale Geometrie beschränkt. Alternativ können Schraubendruckfedern an den Schaltungsträger gesteckt werden und es kann so eine elektrische Verbindung zu dem Schaltungsträger hergestellt werden. Werden Schraubendruckfedern frei eingesteckt, können sich diese grundsätzlich bei Schwingungsbelastung frei bewegen und einen Kontakt zu dem elektrischen Kontakt verlieren. Das Patentdokument EP 0 922946 A2 offenbart eine Drucksensoranordnung die Druckfedern und einen Schaltungsträger umfasst.

### Offenbarung der Erfindung

Es wird daher ein Verfahren zur Herstellung eines Sensors, insbesondere eines Drucksensors, zur Erfassung mindestens einer Eigenschaft eines Mediums, vorgeschlagen, welches den oben dargestellten Stand der Technik in vorteilhafter Weise weiterentwickelt. Die Erfindung betrifft ein Verfahren zur Herstellung eines Sensors nach Anspruch 1 und einen Sensor nach Anspruch 8.

Das Medium kann insbesondere ein fluides Medium, insbesondere ein Gas und/oder eine Flüssigkeit sein. Bei der mindestens einen Eigenschaft kann es sich um eine beliebige physikalische und/oder chemische Eigenschaft des Mediums handeln, insbesondere kann die mindestens eine Eigenschaft der Druck des Mediums sein.

Unter einem "Sensor" kann im Sinne der vorliegenden Erfindung grundsätzlich eine Vorrichtung verstanden werden, welche mindestens eine Messgröße erfasst und mindestens ein Sensorsignal generiert, beispielsweise ein elektrisches Sensorsignal, aus welchem auf die Messgröße rückgeschlossen werden kann. Der Sensor kann insbesondere eine Schnittstelle aufweisen, welche ganz oder teilweise als Hardware und/oder Software ausgebildet sein kann. Der Sensor kann eingerichtet sein, um eine Messgröße, beispielsweise eine Messgröße ausgewählt aus einer physikalischen, einer chemischen oder einer biologischen Messgröße, insbesondere einen Druck des Mediums, in ein elektrisches Signal, bevorzugt in eine elektrische Spannung und/oder einen elektrischen Strom umzuwandeln. Anders ausgedrückt kann der Sensor in Abhängigkeit eines auf ihn ausgeübten Drucks ein entsprechendes Ausgangssignal, beispielsweise in Form einer Spannung und/oder eines Stromes erzeugen. Das Sensorsignal kann digital oder auch analog sein.

Das Verfahren kann die Verfahrensschritte, welche im Folgenden beschrieben werden, umfassen. Die Verfahrensschritte können beispielsweise in der vorgegebenen Reihenfolge durchgeführt werden. Eine andere Reihenfolge ist jedoch ebenfalls denkbar. Weiterhin können ein oder mehrere Verfahrensschritte gleichzeitig oder zeitlich überlappend durchgeführt werden. Weiterhin können einer, mehrere oder alle der Verfahrensschritte einfach oder auch wiederholt durchgeführt werden. Das Verfahren kann darüber hinaus noch weitere Verfahrensschritte umfassen.

Das Verfahren zur Herstellung eines Sensors, insbesondere eines Drucksensors, zur Erfassung mindestens einer Eigenschaft eines Mediums, insbesondere eines fluiden Mediums, umfasst folgende Schritte:
a) Bereitstellen einer Druckfeder, wobei die Druckfeder mindestens ein erstes Ende und mindestens ein zweites Ende aufweist;
b) Verbinden des ersten Endes der Druckfeder mit einem Schaltungsträger;
c) Bereitstellen mindestens eines Gehäuses, wobei in dem Gehäuse mindestens ein elektrischer Kontakt aufgenommen ist;
d) Inkontaktbringen des zweiten Endes der Druckfeder mit dem elektrischen Kontakt des Gehäuses.

In Schritt d) wird das zweite Ende der Druckfeder mittels mindestens eines Führungselements mit dem elektrischen Kontakt in Kontakt gebracht.

Der elektrische Kontakt kann beispielsweise mindestens eine Kontaktfläche aufweisen. Die Kontaktfläche des elektrischen Kontakts kann grundsätzlich beliebig zu dem Schaltungsträger orientiert sein. Insbesondere kann diese parallel zu dem Schaltungsträger orientiert sein. Allerdings ist eine parallele Ausrichtung der Kontaktfläche des elektrischen Kontaktes zu dem Schaltungsträger, beispielsweise zu einer Oberfläche des Schaltungsträgers, nicht zwingend erforderlich. So kann diese Ausrichtung beispielsweise in einem beliebigen Winkel erfolgen, beispielsweise in einem von 0° abweichenden Winkel. Weiterhin kann die Druckfeder mindestens eine Federachse aufweisen, beispielsweise eine Symmetrieachse. Die Kontaktfläche des elektrischen Kontaktes kann grundsätzlich beliebig zu der Federachse ausgerichtet sein. So kann die Kontaktfläche beispielsweise senkrecht zu der Federachse ausgerichtet sein. Es ist jedoch auch eine andere Ausrichtung möglich, beispielsweise eine Ausrichtung in einem von 90° verschiedenen Winkel.

Unter einer "Druckfeder" ist im Sinne der vorliegenden Erfindung grundsätzlich ein beliebiges Federelement zu verstehen, welches elastisch komprimierbar ist und im komprimierten Zustand einen Druck ausüben kann. Die Druckfeder kann eingerichtet sein, um durch Formänderungen Kräfte zu speichern und zu übertragen. Weiterhin kann die Druckfeder eingerichtet sein, um Energie durch Zusammendrücken durch Enden der Druckfeder zu speichern und um die Energie bei einem Entspannen der Druckfeder ganz oder zumindest teilweise wieder freizugeben. Insbesondere kann die Druckfeder aus einem Rund- oder Profildraht hergestellt sein. Der Rund- oder Profildraht kann vorzugsweise aus einem elektrisch leitfähigen Material hergestellt sein, insbesondere aus Stahl. Insbesondere kann die Druckfeder eine Torsionsfeder umfassen, beispielsweise eine gewundene Torsionsfeder. Insbesondere kann es sich bei der Druckfeder um eine Tonnenfeder handeln. Die Tonnenfeder kann mindestens eine Grundform aufweisen, ausgewählt aus der Gruppe bestehend aus: einer zylindrischen Grundform, einer konischen Grundform, einer umgekehrt konischen Grundform, einer bauchigen Form. Die bauchige Form kann einen variierenden Durchmesser aufweisen, welcher an den Enden der Tonnenfeder geringer ist als in einem Zwischenbereich.

Weiterhin kann es sich bei der Druckfeder um eine Flachformfeder handeln. Der Begriff "Flachformfeder" bezeichnet grundsätzlich eine beliebige Biegefeder, deren Gestalt von einer gestreckten bzw. geraden Grundform abweicht und durch Abbiegungen verschiedenster Art gekennzeichnet ist. Die Flachformfeder kann insbesondere aus mindestens einem Federband und/oder mindestens einem Federdraht hergestellt sein. Die Flachformfeder kann insbesondere eine S-Feder sein, welche in einer Erstreckungsrichtung der S-Feder einen Querschnitt in der Form des Buchstaben "S" aufweist.

Die Druckfeder kann mindestens ein erstes Ende und mindestens ein zweites Ende umfassen. Das erste Ende und/oder das zweite Ende können insbesondere geschliffen sein und eingerichtet sein, um auf einem Bauteil aufzuliegen. Insbesondere können das erste Ende und/oder das zweite Ende mindestens eine Auflagefläche umfassen, welche eingerichtet ist, um die Druckfeder an eine Fläche, insbesondere an eine Oberfläche des Schaltungsträgers, anzulegen. Insbesondere bei der Tonnenfeder können das erste Ende und/oder das zweite Ende eine Verjüngung aufweisen. Der Begriff "Verjüngung" bezeichnet im Sinne der vorliegenden Erfindung grundsätzlich eine Verkleinerung eines Querschnitts der Tonnenfeder quer, insbesondere senkrecht, zu einer Längsachse der Tonnenfeder.

Die Bezeichnungen "erstes" und "zweites" Ende sind als rein beschreibend und als reine Bezeichnungen anzusehen, ohne eine Rangfolge anzugeben und beispielsweise ohne die Möglichkeit auszuschließen, dass mehrere Arten von ersten Enden und mehrere Arten von zweiten Enden oder jeweils genau eine Art vorgesehen sein kann. Weiterhin können zusätzliche Enden, beispielsweise dritte Enden, vorhanden sein.

Der Begriff "Schaltungsträger" bezeichnet ein beliebiges Element, welches ausgestaltet ist, um mindestens eine Ansteuerung und/oder mindestens eine Auswerteschaltung, beispielsweise eine elektrische und/oder elektronische Schaltung, zu tragen und/oder zu umfassen. Der Schaltungsträger kann eine Steuer- und Auswerteeinheit umfassen, welche eingerichtet ist, um den Sensor anzusteuern. Insbesondere kann es sich bei der Steuer- und Auswerteeinheit um eine anwendungsspezifische integrierte Schaltung (ASIC) handeln.

Bei dem Schaltungsträger kann es sich beispielsweise um einen Keramikschaltungsträger und/oder einen Kunststoffschaltungsträger handeln. Der Schaltungsträger kann beispielsweise ganz oder teilweise als Leiterplatte ausgestaltet sein oder mindestens eine Leiterplatte umfassen. Auch andere Ausgestaltungen sind grundsätzlich denkbar. Der Schaltungsträger kann mindestens einen elektronischen Baustein und/oder mindestens eine Leiterbahn umfassen. Weiterhin kann der Schaltungsträger mindestens eine elektrische Kontaktfläche, insbesondere mindestens einen Kontaktpad, umfassen. Die elektrische Kontaktfläche kann aus einem elektrisch leitfähigen Material hergestellt sein und eine beliebig geformte Grundfläche aufweisen. Der Schaltungsträger kann mindestens ein Sensorelement zur Erfassung der mindestens einen Eigenschaft aufweisen und/oder elektrisch mit mindestens einem Sensorelement zur Erfassung der mindestens einen Eigenschaft verbunden sein.

Das erste Ende der Druckfeder kann insbesondere stoffschlüssig mit dem Schaltungsträger verbunden werden. Der Begriff "stoffschlüssig" bezeichnet im Sinne der vorliegenden Erfindung grundsätzlich eine Eigenschaft einer Verbindung zwischen zwei oder mehr Bauteilen, bei welcher die Bauteile durch atomare Kräfte und/oder durch molekulare Kräfte zusammengehalten werden. Insbesondere kann das erste Ende der Druckfeder durch mindestens einen Lötprozess stoffschlüssig mit dem Schaltungsträger verbunden werden. Der Begriff "Lötprozess" bezeichnet grundsätzlich ein thermisches Verfahren zu einem stoffschlüssigen Fügen von Werkstoffen, bei welchem eine flüssige Phase durch ein Schmelzen und/oder durch eine Diffusion an Grenzflächen entsteht. Weiterhin kann das erste Ende der Druckfeder durch Kleben mit dem Schaltungsträger verbunden werden. Das Kleben kann insbesondere eine Verwendung eines leitfähigen Klebstoffs umfassen. Alternativ oder zusätzlich kann das erste Ende der Druckfeder durch Stecken oder durch Klemmen mit dem Schaltungsträger verbunden werden. Auch weitere Verfahren sind grundsätzlich denkbar.

Der Begriff "Gehäuse" bezieht sich im Sinne der vorliegenden Erfindung grundsätzlich auf ein beliebig geformtes Element, welches eingerichtet ist, um Bauteile der Vorrichtung ganz oder zumindest teilweise zu umschließen und um diese Bauteile weiterhin vor externen Einflüssen wie mechanischer Belastung und/oder Feuchtigkeit zu schützen. Das Gehäuse kann mehrteilig ausgestaltet sein. Mindestens ein erster Gehäuseteil kann mit mindestens einem zweiten Gehäuseteil verbunden sein. Insbesondere kann der erste Gehäuseteil mit dem zweiten Gehäuseteil verschraubt sein. Weiterhin können das erste Gehäuseteil und das zweite Gehäuseteil zusammengeklebt oder zusammengeschweißt sein. Das zweite Gehäuseteil kann weiterhin mindestens einen Mehrkant, insbesondere einen Sechskant, umfassen, mittels dessen der Sensor beispielsweise in eine Sensoraufnahme einschraubbar ist. Insbesondere kann das Gehäuse eingerichtet sein, um die Druckfeder gegen den Schaltungsträger zu pressen.

Das Gehäuse kann zumindest teilweise aus mindestens einem Kunststoffmaterial hergestellt werden. Insbesondere kann das Gehäuse mittels mindestens eines Spritzgießprozesses hergestellt werden. Der elektrische Kontakt kann zumindest teilweise in das Kunststoffmaterial eingebettet werden, insbesondere zumindest teilweise mit dem Kunststoffmaterial umspritzt werden.

Der Begriff "elektrischer Kontakt" bezeichnet im Sinne der vorliegenden Erfindung grundsätzlich ein beliebiges Element, welches aus einem elektrisch leitfähigen Material hergestellt ist und welches eingerichtet ist, um eine elektrische Kontaktierung zwischen mindestens zwei Bauteilen herzustellen. Der elektrische Kontakt kann mindestens eine Auflagefläche umfassen. Insbesondere kann der elektrische Kontakt ganz oder teilweise aus Kupfer und/oder einer Kupferlegierung hergestellt sein. Die Auflagefläche kann, alternativ oder zusätzlich, mindestens ein Material umfassen ausgewählt aus der Gruppe bestehend aus: Nickel, Gold, Silber. Auch andere Materialien sind grundsätzlich denkbar. Insbesondere kann der elektrische Kontakt mindestens einen Kontaktstift umfassen, insbesondere mindestens einen Steckerpin. Der Kontaktstift kann vorzugsweise eine längliche Form aufweisen und mindestens einen Querschnitt aufweisen, ausgewählt aus der Gruppe bestehend aus: einem runden Querschnitt, einem quadratischen Querschnitt, einem rechteckigen Querschnitt. Auch andere Ausführungsformen sind grundsätzlich denkbar. Der elektrische Kontakt kann mit mindestens einem Steckverbinder des Sensors verbunden sein, über welchen der Sensor von außen elektrisch kontaktierbar ist.

Das Gehäuse kann mindestens eine Halterung für den elektrischen Kontakt aufweisen. Der Begriff "Halterung" bezeichnet im Sinne der vorliegenden Erfindung grundsätzlich eine beliebige Vorrichtung, welche eingerichtet ist, den elektrischen Kontakt zu fixieren. Der Begriff "Fixieren" bezeichnet im Sinne der vorliegenden Erfindung grundsätzlich, dass der elektrische Kontakt in seiner Position derart festgehalten ist, dass ein Verschieben und/oder ein Verrutschen des elektrischen Kontakts in der Halterung ganz oder zumindest teilweise reduziert oder sogar verhindert ist. Die Halterung kann beispielsweise mindestens ein Material, insbesondere ein Kunststoffmaterial, umfassen, in welchem der elektrische Kontakt ganz oder teilweise eingebettet ist, insbesondere formschlüssig, besonders bevorzugt durch Umspritzen.

Der Begriff "Führungselement" bezeichnet im Sinne der vorliegenden Erfindung grundsätzlich ein beliebiges Element, welches eingerichtet ist, um die Druckfeder ganz oder zumindest teilweise aufzunehmen und zu dem elektrischen Kontakt zu führen. Erfindungsgemäß ist das Führungselement eingerichtet, um die Druckfeder in ihrer Position derart festzuhalten, dass ein Verschieben und/oder ein Verrutschen der Druckfeder in dem Führungselement ganz oder zumindest teilweise reduziert oder sogar verhindert ist. Das Führungselement kann insbesondere eingerichtet sein, dass eine Selbstzentrierung der Druckfeder erfolgt.

In das Führungselement kann mindestens ein Führungskanal eingebracht werden. Der Begriff "Führungskanal" bezeichnet grundsätzlich einen länglichen Hohlkörper. Insbesondere kann es sich um einen hülsenförmigen Hohlkörper handeln. Der Führungskanal kann mittels Bohren gebildet werden. Alternativ oder zusätzlich kann das Führungselement mittels mindestens eines Spritzgießprozesses hergestellt werden und der Führungskanal kann während des Spritzgießprozesses ausgebildet werden. Der Führungskanal kann derart ausgebildet werden, dass der Führungskanal mindestens einen Querschnitt aufweist, ausgewählt aus der Gruppe bestehend aus: einem runden Querschnitt, einem ovalen Querschnitt, einem polygonalen Querschnitt. Der Führungskanal wird erfindungsgemäß derart ausgebildet, dass der Führungskanal eine konische Grundform, insbesondere konisch zu dem Gehäuse hin, aufweist. Der Führungskanal kann derart ausgebildet werden, dass mindestens ein Abschnitt des Führungskanals senkrecht oder schräg zu einer Zusammenbauachse des ersten Gehäuseteils und des zweiten Gehäuseteils des Sensors verläuft, beispielsweise in einem Winkel von 5° bis 80°, vorzugsweise von 15° bis 65°.

Die Halterung und das Führungselement können als ein Bauteil hergestellt werden. Auch weitere Ausführungsformen sind grundsätzlich denkbar. Das Führungselement wird erfindungsgemäß zumindest teilweise aus mindestens einem Kunststoffmaterial hergestellt, insbesondere mittels mindestens eines Spritzgießprozesses.

Weiterhin wird ein Sensor, insbesondere Drucksensor, zur Erfassung mindestens einer Eigenschaft eines Mediums vorgeschlagen. Der Sensor ist herstellbar nach dem Verfahren, welches bereits beschrieben wurde bzw. im Folgenden noch beschrieben wird. Der Sensor umfasst:
- mindestens ein Gehäuse, wobei in dem Gehäuse mindestens ein elektrischer Kontakt aufgenommen ist;
- mindestens einen Schaltungsträger; und
- mindestens eine Druckfeder, wobei die Druckfeder eine elektrische Kontaktierung zwischen dem elektrischen Kontakt und dem Schaltungsträger herstellt, wobei die Druckfeder gegen den Schaltungsträger gepresst wird.

Der Sensor weist mindestens ein Führungselement auf, welches eingerichtet ist, um die Druckfeder mit dem elektrischen Kontakt in Kontakt zu bringen.

Der vorgeschlagene Sensor zur Erfassung mindestens einer Eigenschaft eines Mediums sowie das Verfahren zu seiner Herstellung weisen gegenüber bekannten Sensoren und Verfahren zahlreiche Vorteile auf. Die Druckfeder kann mit dem Schaltungsträger verbunden werden, insbesondere kann die Druckfeder stoffschlüssig mit dem Schaltungsträger, beispielsweise mittels Löten, verbunden werden und über ein Führungselement, insbesondere über eine geeignete Führungsgeometrie des Führungselements an den elektrischen Kontakt geführt werden, so dass ein Umknicken und/oder ein Wegdrehen der Druckfeder zumindest weitgehend reduziert oder sogar verhindert werden kann. Das Verbinden der Druckfeder mit dem Schaltungsträger kann alternativ oder zusätzlich mittels Löten, Kleben, Stecken und/oder Klemmen erfolgen.

Das Führungselement und das Gehäuse können als ein Bauteil ausgestaltet sein oder das Führungselement und das Gehäuse können als separate Bauteile ausgestaltet sein. Das Führungselement und das Gehäuse können insbesondere aus einem elektrisch nicht leitfähigen Material, insbesondere aus Kunststoff, hergestellt werden. Weiterhin kann der elektrische Kontakt in das Gehäuse eingepresst werden und es können insbesondere unterschiedliche Steckerwinkel flexibel angeschlossen werden.

Das Führungselement kann insbesondere eingerichtet sein, um die Druckfeder, insbesondere die Tonnenfeder, Winkel und Lage unabhängig zu fixieren. Das Führungselement kann insbesondere eingerichtet sein, derart, dass die Druckfeder, insbesondere die Tonnenfelder, große Federwege in einer definierten Form zurücklegen kann. Eine Kraftentkopplung kann durch die Druckfeder selbst erfolgen. Alternativ kann die Kraftentkopplung zumindest teilweise durch das Führungselement erfolgen. Es kann sich grundsätzlich eine Vereinfachung des Inkontaktbringens der Druckfeder mit dem elektrischen Kontakt ergeben. Es kann sich weiterhin eine Reduktion einer Komplexität des Sensoraufbaus ergeben.

Die Druckfeder, insbesondere die Tonnenfeder, kann zylindrisch oder umgekehrt konisch geformt sein. Auch andere Ausführungsformen sind grundsätzlich denkbar. Es ist grundsätzlich eine variable Einstellung einer Federkraft der Druckfeder möglich, beispielsweise durch Tausch oder durch Anpassung der Druckfeder. Durch eine variable Auslegung und durch eine Geometrie der Druckfeder, insbesondere der Tonnenfeder, kann die Druckfeder robust gegenüber einer Schwingungsanregung sein. Durch eine gezielte Auslegung des Führungselements kann eine Selbstzentrierung bei einem Zusammenbau erfolgen und somit eine einfache Montage ohne zusätzliche Kontrolle ermöglichen.

### Kurze Beschreibung der Figuren

Weitere optionale Einzelheiten und Merkmale der Erfindung ergeben sich aus der nachfolgenden Beschreibung eines bevorzugten Ausführungsbeispiels, welches in der nachfolgenden Figur schematisch dargestellt ist.

Es zeigen:
- Figur 1: eine Schnittdarstellung eines Ausführungsbeispiels eines erfindungsgemäßen Sensors zur Erfassung mindestens einer Eigenschaft eines Mediums; und
- Figur 2: eine Schnittdarstellung eines weiteren Ausführungsbeispiels eines erfindungsgemäßen Sensors zur Erfassung mindestens einer Eigenschaft eines Mediums.

### Ausführungsformen der Erfindung

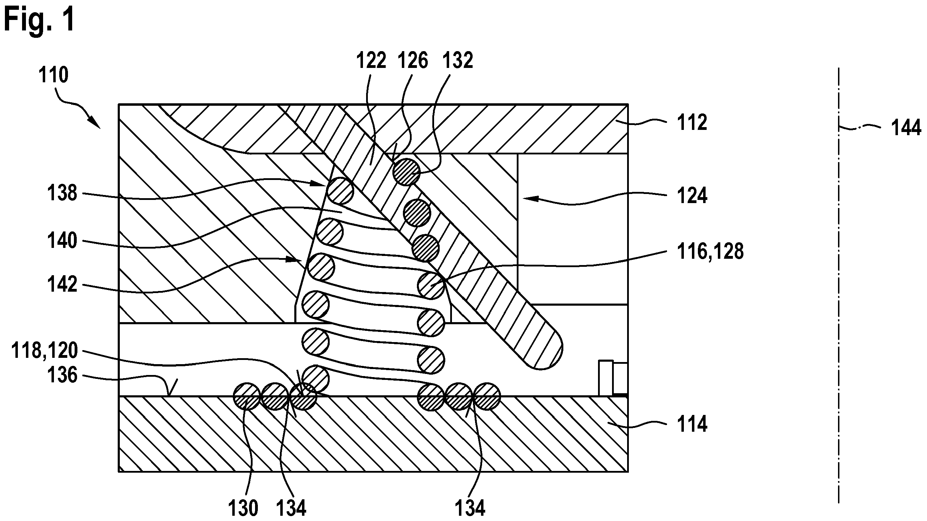

Figur 1 zeigt ein exemplarisches Ausführungsbeispiel eines Sensors 110 zur Erfassung mindestens einer Eigenschaft eines Mediums in einer Schnittdarstellung. In dieser Figur ist lediglich ein Kontaktbereich des Sensors 110 dargestellt. Für einen möglichen vollständigen Aufbau des Sensors 110, abgesehen von dem erfindungsgemäß gestalteten Kontaktbereich gemäß Figur 1, kann grundsätzlich auf den Stand der Technik verwiesen werden, beispielsweise auf DE 10 2011 088044 A1 und/oder auf DE 10 2013 202898 A. Auch andere Ausgestaltungen sind möglich.

Der Sensor 110 umfasst mindestens ein Gehäuse 112, mindestens einen Schaltungsträger 114 und mindestens eine Druckfeder 116.

Der Schaltungsträger 114 kann mindestens eine elektrische Kontaktfläche 118, insbesondere mindestens einen Kontaktpad 120, umfassen. Die Druckfeder 116 kann mit dem Schaltungsträger 114 durch mindestens eine stoffschlüssige Verbindung verbunden sein, insbesondere durch Verlötung.

In dem Gehäuse 112 ist ein elektrischer Kontakt 122 aufgenommen. Das Gehäuse 112 kann mindestens eine Halterung 124 für den elektrischen Kontakt 122 aufweisen. Der elektrische Kontakt 122 kann ganz oder teilweise in mindestens ein Material der Halterung 124 eingebettet sein, insbesondere formschlüssig, besonders bevorzugt durch Umspritzen. Der elektrische Kontakt 122 kann weiterhin mindestens eine Auflagefläche 126 aufweisen. Diese Auflagefläche 126, welche auch als Kontaktfläche des elektrischen Kontakts 122 bezeichnet werden kann, muss nicht notwendigerweise parallel zum Schaltungsträger 114 oder senkrecht zu einer Federachse der Druckfeder 116 orientiert sein. Die Auflagefläche 126 kann von der Druckfeder 116 elektrisch kontaktiert werden.

Die Druckfeder 116 stellt eine elektrische Kontaktierung zwischen dem elektrischen Kontakt 122 und dem Schaltungsträger 114 her. Insbesondere kann die Druckfeder 116 eine Tonnenfeder 128 umfassen. Die Druckfeder kann ein erstes Ende 130 und ein zweites Ende 132 umfassen. Insbesondere kann das erste Ende 130 mindestens eine Auflagefläche 134 umfassen, welche eingerichtet ist, um die Druckfeder 116 an eine Oberfläche 136 des Schaltungsträgers 114 in Kontakt zu bringen.

Der Sensor 110 weist weiterhin mindestens ein Führungselement 138 auf, welches eingerichtet ist, um die Druckfeder 116 mit dem elektrischen Kontakt 122 in Kontakt zu bringen. Das Führungselement 138 kann mindestens einen Führungskanal 140 umfassen. Der Führungskanal 140 kann insbesondere einen runden Querschnitt aufweisen. Der Führungskanal 140 kann insbesondere derart ausgebildet sein, dass mindestens ein Abschnitt 142 des Führungskanals 140 schräg zu einer Zusammenbauachse 144 des Sensors 110 verläuft.

Das Führungselement 138 und das Gehäuse 112, insbesondere die Halterung 124, können als ein Bauteil oder als separates Bauteil ausgebildet sein. Insbesondere kann das Führungselement 138 mittels mindestens eines Spritzgießprozesses hergestellt sein.

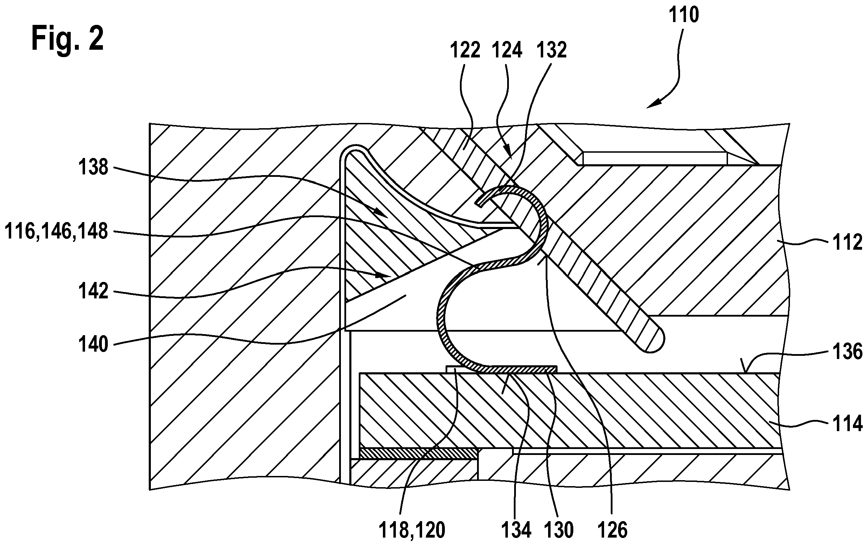

Figur 2 zeigt ein weiteres Ausführungsbeispiel des Sensors 110 in einer Schnittdarstellung. In dieser Figur ist ebenfalls lediglich ein Kontaktbereich des Sensors 110 dargestellt. Für einen möglichen vollständigen Aufbau des Sensors 110, abgesehen von dem erfindungsgemäß gestalteten Kontaktbereich gemäß Figur 2, kann grundsätzlich auf den Stand der Technik verwiesen werden, beispielsweise auf DE 10 2011 088044 A1 und/oder auf DE 102013 202898 A.

Das Ausführungsbeispiel gemäß Figur 2 entspricht in weiten Teilen dem Ausführungsbeispiel gemäß Figur 1, so dass in weiten Teilen auf die Beschreibung der Figur 1 oben verwiesen werden kann. In dem Ausführungsbeispiel gemäß Figur 2 weist der Sensor 110 eine Flachformfeder 146, insbesondere eine S-Feder 148 auf. Die S-Feder 148 kann insbesondere einen Querschnitt in der Form des Buchstaben "S" aufweisen. Das erste Ende 130 und das zweite Ende 132 der S-Feder kann die Auflagefläche 134 umfassen. Die Auflagefläche 134 kann eingerichtet sein, um die S-Feder 148 an die Oberfläche 136 des Schaltungsträgers 114 anzulegen.

## Patentansprüche

1. Verfahren zur Herstellung eines Sensors (110), insbesondere eines Drucksensors, zur Erfassung mindestens einer Eigenschaft eines Mediums, insbesondere eines fluiden Mediums, wobei das Verfahren folgende Schritte umfasst:
a) Bereitstellen einer Druckfeder (116), wobei die Druckfeder (116) mindestens ein erstes Ende (130) und mindestens ein zweites Ende (132) aufweist;
b) Verbinden des ersten Endes (130) der Druckfeder (116) mit einem Schaltungsträger (114);
c) Bereitstellen mindestens eines Gehäuses (112), wobei in dem Gehäuse (112) mindestens ein elektrischer Kontakt (122) aufgenommen ist;
d) Inkontaktbringen des zweiten Endes (132) der Druckfeder (116) mit dem elektrischen Kontakt (122) des Gehäuses (112);
wobei in Schritt d) das zweite Ende (132) der Druckfeder (116) mittels mindestens eines Führungselements (138) des Sensors (110) mit dem elektrischen Kontakt (122) in Kontakt gebracht wird, wobei das Führungselement (138) die Druckfeder (116) ganz oder teilweise aufnimmt und zu dem elektrischen Kontakt (122) führt und eingerichtet ist, um die Druckfeder (116) in ihrer Position derart festzuhalten, dass ein Verschieben und/oder Verrutschen in dem Führungselement (138) zumindest teilweise reduziert ist, wobei in das Führungselement (138) mindestens ein Führungskanal (140) eingebracht wird, wobei der Führungskanal (140) derart ausgebildet wird, dass der Führungskanal (140) eine konische Grundform aufweist und das Führungselement (138) zumindest teilweise aus mindestens einem Kunststoffmaterial hergestellt ist.

2. Verfahren nach dem vorhergehenden Anspruch, wobei das erste Ende (130) der Druckfeder (116) stoffschlüssig mit dem Schaltungsträger (114) verbunden wird.

3. Verfahren nach einem der vorhergehenden Ansprüche, wobei das Gehäuse (112) und das Führungselement (138) ganz oder teilweise als ein Bauteil gefertigt sind.

4. Verfahren nach einem der vorhergehenden Ansprüche, wobei das Gehäuse (112) zumindest teilweise aus mindestens einem Kunststoffmaterial hergestellt ist, insbesondere mittels mindestens eines Spritzgießprozesses.

5. Verfahren nach Anspruch 1, wobei der Führungskanal (140) mittels Bohren gebildet wird.

6. Verfahren nach Anspruch 1, wobei das Führungselement (138) mittels mindestens eines Spritzgießprozesses hergestellt wird und der Führungskanal (140) während des Spritzgießprozesses ausgebildet wird.

7. Verfahren nach einem Anspruch 1, wobei der Führungskanal (140) derart ausgebildet wird, dass mindestens ein Abschnitt des Führungskanals (140) schräg zu einer Zusammenbauachse (144) des Sensors (110) verläuft.

8. Sensor (110), insbesondere Drucksensor, zur Erfassung mindestens einer Eigenschaft eines Mediums, wobei der Sensor (110) nach einem der vorhergehenden Ansprüche herstellbar ist, wobei der Sensor (110) umfasst:
• mindestens ein Gehäuse (112), wobei in dem Gehäuse (112) mindestens ein elektrischer Kontakt (122) aufgenommen ist;
• mindestens einen Schaltungsträger (114); und
• mindestens eine Druckfeder (116), wobei die Druckfeder (116) eine elektrische Kontaktierung zwischen dem elektrischen Kontakt (122) und dem Schaltungsträger (114) herstellt, wobei die Druckfeder (116) gegen den Schaltungsträger (114) gepresst wird;
wobei der Sensor (110) weiterhin mindestens ein Führungselement (138) aufweist, welches eingerichtet ist, um die Druckfeder (116) mit dem elektrischen Kontakt (122) in Kontakt zu bringen wobei das Führungselement (138) die Druckfeder (116) ganz oder teilweise aufnimmt und zu dem elektrischen Kontakt (122) führt und eingerichtet ist, um die Druckfeder (116) in ihrer Position derart festzuhalten, dass ein Verschieben und/oder Verrutschen in dem Führungselement (138) zumindest teilweise reduziert ist, wobei in das Führungselement (138) mindestens ein Führungskanal (140) eingebracht ist, wobei der Führungskanal (140) derart ausgebildet ist, dass der Führungskanal (140) eine konische Grundform aufweist und das Führungselement (138) zumindest teilweise aus mindestens einem Kunststoffmaterial hergestellt ist.

9. Sensor (110) nach dem vorhergehenden Anspruch, wobei die Druckfeder (116) eine Flachformfeder (146) oder eine Tonnenfeder (128) umfasst, wobei die Tonnenfeder (128) mindestens eine Grundform aufweist, ausgewählt aus der Gruppe bestehend aus: einer zylindrischen Grundform, einer konischen Grundform, einer umgekehrt konischen Grundform, einer bauchigen Form.

## Claims

1. Method for producing a sensor (110), in particular a pressure sensor, for detecting at least one property of a medium, in particular a fluid medium, wherein the method comprises the following steps:
a) providing a compression spring (116), wherein the compression spring (116) has at least a first end (130) and at least a second end (132) ;
b) connecting the first end (130) of the compression spring (116) to a circuit carrier (114) ;
c) providing at least one housing (112), wherein at least one electrical contact (122) is accommodated in the housing (112);
d) bringing the second end (132) of the compression spring (116) into contact with the electrical contact (122) of the housing (112) ;
wherein in step d) the second end (132) of the compression spring (116) is brought into contact with the electrical contact (122) by means of at least one guide element (138) of the sensor (110), wherein the guide element (138) accommodates the compression spring (116) wholly or partly and guides it towards the electrical contact (122) and is configured to hold the compression spring (116) firmly in its position in such a way that displacement and/or slippage in the guide element (138) is at least partly reduced, wherein at least one guide channel (140) is introduced into the guide element (138), wherein the guide channel (140) is formed in such a way that the guide channel (140) has a conical basic shape and the guide element (138) is at least partly produced from at least one plastic material.

2. Method according to the preceding claim, wherein the first end (130) of the compression spring (116) is integrally connected to the circuit carrier (114).

3. Method according to one of the preceding claims, wherein the housing (112) and the guide element (138) are wholly or partly fabricated as one component.

4. Method according to one of the preceding claims, wherein the housing (112) is at least partly produced from at least one plastic material, in particular by means of at least one injection-moulding process.

5. Method according to Claim 1, wherein the guide channel (140) is formed by means of drilling.

6. Method according to Claim 1, wherein the guide element (138) is produced by means of at least one injection-moulding process and the guide channel (140) is formed during the injection-moulding process.

7. Method according to Claim 1, wherein the guide channel (140) is formed in such a way that at least one section of the guide channel (140) extends obliquely relative to an assembly axis (144) of the sensor (110).

8. Sensor (110), in particular pressure sensor, for detecting at least one property of a medium, wherein the sensor (110) can be produced according to one of the preceding claims, wherein the sensor (110) comprises:
o at least one housing (112), wherein at least one electrical contact (122) is accommodated in the housing (112);
o at least one circuit carrier (114); and
o at least one compression spring (116), wherein the compression spring (116) produces an electric contact between the electrical contact (122) and the circuit carrier (114), wherein the compression spring (116) is pressed against the circuit carrier (114), wherein the sensor (110) further has at least one guide element (138), which is configured to bring the compression spring (116) into contact with the electrical contact (122), wherein the guide element (138) accommodates the compression spring (116) wholly or partly and guides it towards the electrical contact (122) and is configured to hold the compression spring (116) firmly in its position in such a way that displacement and/or slippage in the guide element (138) is at least partly reduced, wherein at least one guide channel (140) is introduced into the guide element (138), wherein the guide channel (140) is formed in such a way that the guide channel (140) has a conical basic shape and the guide element (138) is at least partly produced from at least one plastic material.

9. Sensor (110) according to the preceding claim, wherein the compression spring (116) comprises a flat spring (146) or a barrel spring (128), wherein the barrel spring (128) has at least a basic shape selected from the group comprising: a cylindrical basic shape, a conical basic shape, an inverted conical basic shape, a bulbous shape.

## Revendications

1. Procédé pour fabriquer un capteur (110), notamment un capteur de pression, destiné à acquérir au moins une propriété d'un milieu, notamment d'un milieu fluide, le procédé comprenant les étapes suivantes :
a) la fourniture d'un ressort de compression (116), le ressort de compression (116) possédant au moins une première extrémité (130) et au moins une deuxième extrémité (132) ;
b) la connexion de la première extrémité (130) du ressort de compression (116) à un porte-circuit (114) ;
c) la fourniture d'au moins un boîtier (112), au moins un contact électrique (122) étant accueilli dans le boîtier (112) ;
d) la mise en contact de la deuxième extrémité (132) du ressort de compression (116) avec le contact électrique (122) du boîtier (112) ;
à l'étape d), la deuxième extrémité (132) du ressort de compression (116) étant amenée en contact avec le contact électrique (122) au moyen d'au moins un élément de guidage (138) du capteur (110), l'élément de guidage (138) accueillant entièrement ou partiellement le ressort de compression (116) et le guidant vers le contact électrique (122) et étant conçu pour maintenir le ressort de compression (116) dans sa position de telle sorte qu'un déplacement et/ou un glissement dans l'élément de guidage (138) est au moins partiellement réduit, au moins un canal de guidage (140) étant ménagé dans l'élément de guidage (138), le canal de guidage (140) étant configuré de telle sorte que le canal de guidage (140) présente une forme de base conique et l'élément de guidage (138) étant au moins partiellement produit à partir d'au moins une matière plastique.

2. Procédé selon la revendication précédente, l'extrémité (130) du ressort de compression (116) étant reliée au porte-circuit (114) par fusion de matières.

3. Procédé selon l'une des revendications précédentes, le boîtier (112) et l'élément de guidage (138) étant entièrement ou partiellement fabriqués comme un élément structural.

4. Procédé selon l'une des revendications précédentes, le boîtier (112) étant au moins partiellement produit à partir d'au moins une matière plastique, notamment au moyen d'au moins un processus de moulage par injection.

5. Procédé selon la revendication 1, le canal de guidage (140) étant formé par perçage.

6. Procédé selon la revendication 1, l'élément de guidage (138) étant produit au moyen d'au moins un processus de moulage par injection et le canal de guidage (140) étant formé pendant le processus de moulage par injection.

7. Procédé selon la revendication 1, le canal de guidage (140) étant configuré de telle sorte qu'au moins une portion du canal de guidage (140) suit un tracé oblique par rapport à un axe d'assemblage (144) du capteur (110).

8. Capteur (110), notamment capteur de pression, destiné à acquérir au moins une propriété d'un milieu, le capteur (110) pouvant être fabriqué selon l'une des revendications précédentes, le capteur (110) comprenant :
* au moins un boîtier (112), au moins un contact électrique (122) étant accueilli dans le boîtier (112) ;
* au moins un porte-circuit (114) ; et
* au moins un ressort de compression (116), le ressort de compression (116) réalisant une mise en contact électrique entre le contact électrique (122) et le porte-circuit (114), le ressort de compression (116) étant compressé contre le porte-circuit (114) ;
le capteur (110) possédant en outre au moins un élément de guidage (138), lequel est conçu pour amener le ressort de compression (116) en contact avec le contact électrique (122), l'élément de guidage (138) accueillant entièrement ou partiellement le ressort de compression (116) et le guidant vers le contact électrique (122) et étant conçu pour maintenir le ressort de compression (116) dans sa position de telle sorte qu'un déplacement et/ou un glissement dans l'élément de guidage (138) est au moins partiellement réduit, au moins un canal de guidage (140) étant ménagé dans l'élément de guidage (138), le canal de guidage (140) étant configuré de telle sorte que le canal de guidage (140) présente une forme de base conique et l'élément de guidage (138) étant au moins partiellement produit à partir d'au moins une matière plastique.

9. Capteur (110) selon la revendication précédente, le ressort de compression (116) comprenant un ressort de forme plate (146) ou un ressort bombé (128), le ressort bombé (128) présentant au moins une forme de base choisie dans le groupe composé de : une forme de base cylindrique, une forme de base conique, une forme de base conique inversée, une forme convexe.
